# EUROPEAN PATENT SPECIFICATION

(11) **EP 3 444 136 B1**
(45) Date of publication and mention of the grant of the patent: **06.09.2023**
(21) Application number: 18185459.7
(22) Date of filing: 25.07.2018
(51) Int. Cl.: B60H 1/34

(54) **AIR VENT FOR A VEHICLE**
LUFTAUSSTRÖMER FÜR EIN FAHRZEUG
DIFFUSEUR D'AIR POUR UN VÉHICULE

(30) Priority: 14.08.2017 DE 102017118450
(43) Date of publication of application: 20.02.2019
(73) Proprietor: Illinois Tool Works Inc., Glenview, IL 60025 (US)
(72) Inventor: Demerath, Michael, 66909 Hüffler (DE)
(74) Representative: Meissner Bolte Partnerschaft mbB

(56) References cited:
- JP-A- 2011 156 930
- US-A- 4 653 385
- US-A- 6 159 092

## Description

The invention relates to an air vent for a vehicle, comprising a housing, an air duct delimited by the housing and having an air inlet end and an air outlet end, wherein an air flow flowing through the air duct can flow from the air inlet end to the air outlet end along a main flow direction, as well as an outflow grating arranged at the air outlet end, wherein the outflow grating has an opening grid with grating openings spaced apart from one another by means of webs.

The document US 4,653,385 A relates to an air intake grille that has an air flow guide member mounted on a housing in such a manner that the direction of air flow can be adjusted using a control member. The air flow guide member is constituted by a sheet assembly formed by laminating a multiplicity of perforated sheets.

The document JP 2011-156930 A relates to an air vent for a vehicle, comprising a housing, an air duct delimited by the housing and having an air inlet end and an air outlet end.

The document US 6,159,092 A relates to an air vent assembly for directing airflow. The air vent assembly includes a housing having an inlet and an outlet. The air vent assembly further includes a first plurality of vanes, each of said first plurality of vanes rotatably secured to the housing. A first link member is rotatably secured to each of the first plurality of vanes such that rotation of one of the plurality of first vanes rotates each of the first vanes.

Such air vents serve for ventilating the interior of a vehicle and are arranged for example in the dashboard of the vehicle so that the air flow emerging from the air outlet end of the air duct gets into the interior of the vehicle, Outflow gratings situated at the air outlet end of the air duct conceal the air duct located behind the outflow grating, as seen from the interior of the vehicle. Furthermore, such air vents can be integrated especially well into the surrounding components of the dashboard. Both of them are visually appealing. However, such outflow gratings have the drawback that the air flow emerging from the air duct is hindered by the outflow grating. In particular, unwanted swirling occurs, which greatly weakens the air flow. This is especially true the finer the opening grid of the outflow grating.

Starting from the discussed prior art, the problem which the invention proposes to solve is to provide an air vent for a vehicle, which allows a dependable orientation of the air flow despite the use of an outflow grating.

The invention solves the problem by the subject matter of independent claim 1. Preferred embodiments of the present invention are laid down in the appended dependent claims.

According to the invention, the aforementioned air vent for a vehicle comprises a plurality of air-guiding elements which are arranged in the air duct upstream of the outflow grating in the flow direction, wherein the air-guiding elements form an opening grid with grating openings which are larger than the grating openings of the outflow grating.

According to the invention, air-guiding elements are mounted upstream of an outflow grating inside the air duct. The air-guiding elements enable a targeted deflecting of the air flow flowing through the air duct from the main flow direction. A deflecting of the air flow by the air-guiding elements can basically occur in any desired direction. For example, the air flow can be directed vertically upward or downward or horizontally to the sides, as regards to a condition of the air vent installed in the vehicle. The air-guiding elements in particular are designed to be adjustable. The air-guiding elements may thus be adjusted relative to the main air flow for the variable deflection of the air flow from the main flow direction. For example, the air-guiding elements may be air-guiding slats or air-guiding gratings, which are further discussed below. The air-guiding elements form an opening grid with grating openings through which the air flow may pass. For example, if slats are provided as air-guiding elements, the grating openings may be formed by the spacings of the individual slats from each other. A grating is meant here as an arrangement of elongated elements having free spaces there between. Several such elements may also run crosswise to each other.

An outflow grating is arranged at the air outlet end of the air duct, i.e., downstream of the air-guiding elements in the main flow direction. The outflow grating for example may be part of a diaphragm mounted on the housing. The outflow grating likewise has an opening grid, formed by grating openings spaced apart from one another by means of webs. Basically, the outflow grating may be formed from mutually parallel webs at uniform spacings, similar to an arrangement of slats. In particular, the opening grid of the outflow grating may be formed by a plurality of intersecting webs. The grating openings of the outflow grating may thus be in particular polygonal, by way of example triangular or square. The grating openings are designed identically in particular here and arranged at regular spacings from one another. The outflow grating may have a plurality of grating openings, in particular it may be provided with grating openings over its entire surface. The webs of the outflow grating may here have a smaller diameter than the grating openings. The outflow grating can be formed for example of metal or of plastic, for example produced in a plastic injection molding process. In particular when made of metal, the outflow grating has a high stability.

According to the invention, the air-guiding elements form an opening grid with grating openings which are larger than the grating openings of the outflow grating. The opening grid of the outflow grating is thus finer than the opening grid of the air-guiding elements. Due to the finer opening grid, the outflow grating forms a visual cover, since the air-guiding elements situated in the air duct upstream of the outflow grating are concealed by the outflow grating, Despite the fine opening grid, the outflow grating allows the air current to pass through the outflow grating. Due to the relatively small grating openings, however, the free cross section of the air flow is reduced, so that, as mentioned in the beginning, unwanted swirling of the air flow may sometimes occur. According to the invention, this swirling is counteracted by the air-guiding elements mounted upstream in the air duct. The air-guiding elements orient the air flow such that the direction of the air flow can be maintained at least for a large part, even after passing through the outflow grating. The air vent according to the invention thus combines the advantages of a finely structurized grating, namely the visual cover, with the possibility of adjusting the direction of the emerging air flow.

According to the invention, the grating openings of the outflow grating each have an opening area in the range from 1 mm² to 25 mm². An outflow grating with such selected opening areas for the grating openings is usually suitable for concealing sufficiently the air duct including the air-guiding elements, so that the air duct is not recognizable from the outside. The webs separating the grating openings from one another may have for example a width in the range of 0.5 mm to 3 mm.

According to another embodiment, the grating openings of the outflow grating are honeycomb-shaped. The grating openings of the outflow grating may thus have a hexagonal opening area each time, being bounded by webs arranged in a hexagon. Thus, each of the grating openings of the outflow grating may be formed by six webs in each case, where adjoining webs subtend an angle therebetween of 120° in particular. Such an outflow grating conceals the air outlet opening especially well, yet offers still enough free cross section for the passage of the air flow. In particular, honeycomb-shaped grating openings are also helpful in achieving the orienting of the air flow, as is discussed further below.

According to another embodiment, the outflow grating has reinforcements on its inner side facing toward the air-guiding elements. These reinforcements may be stiffening ribs for example, which extend along the outflow grating. Thanks to such reinforcements, the stability of the outflow grating is enhanced, so that even with an especially fine opening grid the outflow grating withstands the loads occurring without damage. In particular, the reinforcements may be arranged on an inner side of the outflow grating facing toward the air duct. The reinforcements are then not visible from the outside, especially from the interior of a vehicle. Such reinforcements are especially expedient when making the outflow grating from plastic. When making the outflow grating by means of plastic injection molding, such reinforcements can be produced in a common work step with the overall outflow grating.

According to the invention, the grating openings of the outflow grating widen in the main flow direction. In particular, the grating openings may widen in the main flow direction and/or in a direction perpendicular to the plane of the outflow grating. As discussed in the beginning, a fine outflow grating, i.e., an outflow grating with relatively small grating openings, has negative impact on the air flow. Thus, the relatively small grating openings generate swirling, among other things, which may impair the orienting of the air flow. The air-guiding elements provided according to the invention admittedly counteract this, as described above. However, depending on the fineness of the opening grid of the outflow grating, the directional effect of the air-guiding elements may be negated at least in part, since the fine outflow grating may straighten out the previously deflected air flow. Therefore - especially for a very fine opening grid of the outflow grating with grating openings which are much smaller than the grating openings of the air-guiding elements - a orienting of the air flow dictated by the air-guiding elements may be impaired by the outflow grating. In particular, it may happen that the air flow regardless of its previous orienting by the air-guiding elements after passing through the outflow grating flows into the interior of the vehicle substantially perpendicular to the surface of the outflow grating.

It has been discovered that a loss of the orienting of the air flow is due in particular to the fact that the webs have flow surfaces which are disposed substantially parallel to the main flow direction of the air flow. Because of this parallel arrangement, the flow surfaces orient the air flow in the main flow direction. This problem is solved by grating openings of the outflow grating which widen in the main flow direction, since now the flow surfaces of the webs of the outflow grating are no longer oriented parallel to the main flow direction, but instead at an angle thereto. Hence, the oriented air flow is no longer forced back into the main flow direction.

A widening of the grating openings of the outflow grating may be accomplished for example by bevels of the webs extending at an angle to the main flow direction. The bevels here form flow surfaces along which the air flow oriented by the air-guiding elements may slide. For example, if a bevel should be oriented upward in relation to an installed condition of the air vent, this bevel can thus support an upward orienting of the air flow, or at least prevent a misguiding of this air flow in another direction. The above discussed honeycomb-shaped structure of the grating openings of the outflow grating is especially significant here. In the case of honeycomb-shaped grating openings, the outflow grating has six adjoining webs for each grating opening, whose bevels extend away from each other in the case of grating openings which widen in the main flow direction. Depending on the orienting of the air flow by the upstream mounted air-guiding elements, the air flow slides here past another bevel of the particular grating opening. Hence, thanks to the six differently oriented bevels of a honeycomb-shaped grating opening, an oriention of the air flow in the corresponding six different directions can be supported or at least especially well maintained.

According to another embodiment, the webs of the outflow grating each have a rounded-off shape at their ends facing away from the air-guiding elements. The inventors have discovered that the aforementioned swirling is generated in particular by the end edges of the webs of the outflow grating. A rounded-off form of the webs at the end edges, i.e., at their air outlet ends, prevents a flow detachment and thus swirling, since the air flow lies against the surfaces of the roundings and follows them for a bit. In this way, the air flow directed by the air-guiding elements can better preserve its orienting. Furthermore, a rounding of the webs also ensures that the flow surfaces of the webs of the outflow grating at least at the end edges of the webs do not run parallel to the main flow direction. Thus, the air flow in this region is not forced back to the main flow direction, as explained above. This embodiment is especially effective in combination with the widening grating openings.

According to an especially practical embodiment, the air-guiding elements provided are pivotably mounted slats which extend perpendicular to the main flow direction. As already mentioned above, slats may thus be provided as air-guiding elements, which extend in particular along a cross section of the air duct, such as a width or a height of the air duct. These slats may deflect the air flow for example downward or upward or to the sides in relation to the installed condition in the vehicle. In particular, at least two groups of slats may be provided, wherein a first group of slats extends horizontally through the air duct for the deflection of the air flow upward or downward from the main flow direction and a second group of slats extends vertically through the air duct for the deflection of the air flow to the left or to the right from the main flow direction. A plurality of slats forms here a grating with grating openings which are defined by the spacings between adjacent slats. These grating openings of the slat arrangement or groups of slats are then larger than the grating openings of the outflow grating.

According to another embodiment, the air-guiding elements may be air-guiding gratings which extend substantially perpendicular to the main flow direction and form a grating package. Alternatively to the slats, an air-guiding grating package may thus be provided. The air-guiding gratings lie here against one another without gaps if possible and are designed to be displaceable relative to one another. The air-guiding gratings can preferably have an identical grating structure with identically configured grating openings and webs. The air-guiding gratings need not stand exactly perpendicular to the main flow direction, but at least stand substantially perpendicular to the main flow direction, so that a deflection of the air flow is made possible. The air-guiding gratings may be configured flat and extending in a plane. The air-guiding gratings may also be curved. In the event of a curvature, the air-guiding gratings have comparable curvatures, so that they can be arranged one against the other as free of gaps as possible. The grating package in particular may also border directly, i.e., free of gaps, on the outflow grating. The air-guiding gratings are designed to be displaceable relative to each other, especially displaceable substantially perpendicular to the main flow direction. In a zero position, the air-guiding gratings may here be arranged such that the grating openings of the individual air-guiding gratings overlap precisely in the main flow direction. In this position, no deflection of the air flow from the main flow direction occurs. By a displacement of the air-guiding gratings relative to each other the grating openings of the individual air-guiding gratings are displaced from each other so that a flow opening is formed, running at a slant to the main flow direction. Hence, the air flow is deflected from the main flow direction. Such air-guiding gratings are especially advantageous in combination with widening grating openings of the outflow grating, since the grating package when placed directly against the outflow grating can guide the air flow directly onto the bevels of the webs of the outflow grating without intervening free space.

According to another embodiment, a synchronizing mechanism is provided, by means of which a parallel displacement of the air-guiding gratings relative to each other is synchronized. The synchronizing mechanism ensures a synchronous adjustment of the air-guiding gratings relative to each other, such that the movement of one air-guiding grating also moves the other air-guiding gratings. Thanks to the synchronous movement of the air-guiding gratings accomplished in this way, the grating openings of the different air-guiding gratings of the grating package can be superimposed in a specific manner and hence the air flow can be deflected in the desired directions. Thanks to the synchronization, only one of the air-guiding gratings needs to be actuated, for example, by an operating element. Then, depending on the movement of the actuated air-guiding grating, the air-guiding gratings connected to the actuated air-guiding grating are moved via the synchronizing mechanism. In particular, for this purpose at least one of the air-guiding gratings can be mounted stationary, for example on the housing of the air vent. Upon movement of the actuated air-guiding grating, the actuated air-guiding grating is braced against the stationary air-guiding grating. According to one embodiment, an inner air-guiding grating is here fixed and the remaining air-guiding gratings can be adjusted synchronously. Inner means here further upstream in the main flow direction. A movement of the air-guiding gratings may then occur in particular by an actuation of the furthest outside situated air-guiding element, i.e., the one closest to the outflow grating. According to another embodiment, an outer air-guiding grating is fixed and the remaining air-guiding gratings are adjusted synchronously. In this case, a movement of the air-guiding gratings can occur in particular by actuation of a furthest inward situated air-guiding grating, i.e., the one furthest away from the outflow grating.

According to one embodiment, the synchronizing mechanism has at least one synchronizing lever which is coupled to the air-guiding grating. The synchronizing lever may preferably extend in parallel with a plane of extension of at least one of the air-guiding gratings. Thanks to the synchronizing lever, a synchronization of the air-guiding gratings along an axis can be realized, for example, along a horizontal axis or a vertical axis. According to another embodiment, the air-guiding gratings are coupled to the synchronizing lever by means of a slotted link guide. This ensures, in particular, that the grating package can also be adjusted along an axis in which the synchronizing lever does not synchronize the movement of the air-guiding gratings with each other. The synchronizing lever need here not be coupled to all air-guiding gratings via slotted link guides. For example, the synchronizing lever may be mounted on one of the air-guiding gratings.

According to one embodiment, the air vent has an operating element for adjusting the air-guiding gratings, wherein the operating element is displaceable in an area which extends parallel to an area of extent of at least one of the air-guiding gratings. The operating element here is coupled to at least one of the air-guiding gratings such that a movement of the operating element causes a corresponding movement of the air-guiding grating coupled thereto. By means of the synchronizing mechanism, once again the other air-guiding gratings of the grating package are adjusted via the actuated air-guiding grating, as explained above. In particular, one of the air-guiding gratings may here be designed stationary with respect to the housing, in order to be braced against the movement of the actuated air-guiding grating. Consequently, an adjustment of the air-guiding gratings can be done by a corresponding adjustment of the operating element. For example, a person operating the unit can displace the operating element upward in order to accomplish an upward deflection of the air flow. Accordingly, a deflection of the air flow can occur in other directions. Such an operation is especially intuitive. The air-guiding gratings may extend here along surfaces running parallel to each other, especially surfaces perpendicular to the main flow direction. The operating element may be formed, for example, by a plate extending in an area parallel to these areas of extent.

According to another embodiment, the outflow grating forms the operating element. The outflow grating in this case is not stationary, but instead can be displaced parallel to the air-guiding gratings. The outflow grating is coupled here to at least one of the air-guiding gratings of the grating package. The outflow grating in particular may be part of the grating package. By moving the outflow grating, the air flow emerging from the air duct can be adjusted intuitively. For this, a person operating the unit only needs to displace the outflow grating in the desired direction, for example with their fingers. By the synchronizing mechanism, a corresponding movement of the air-guiding gratings follows. For easier operation, the outflow grating may have a grip piece on its side facing away from the air duct.

According to an alternative embodiment, an operating element is designed separately from the outflow grating. For example, the operating element may be arranged on a diaphragm of the air vent to the side of the outflow grating. According to another embodiment, an operating element is arranged on the outflow grating, wherein a transmission element coupled to the operating element extends through the outflow grating and the grating package, is braced on a stationary component within the air duct and acts on the inner air-guiding grating. The operating element may here be displaceable in a surface which extends parallel to an area of extent of at least one of the air-guiding gratings, as explained above. In particular, the operating element may be arranged displaceably on the outflow grating or displaceably in a recess of the outflow grating. The operating element for example can be formed by a plate, having a smaller area of extent than the outflow grating or the air-guiding gratings. The operating element may also be designed movably along a portion of a spherical surface. In particular, the operating element may here be formed by a prolongation of the transmission element. The transmission element acts on the inner air-guiding element, i.e., the one situated furthest upstream in the main flow direction. By the synchronizing mechanism, the other air-guiding gratings follow the movement of the actuated inner air-guiding grating. A bracing occurs here against a stationary component joined to the housing. In these embodiments, the outflow grating is preferably disposed stationary on the housing, in particular, on a diaphragm of the housing.

The invention will be explained more closely below with the aid of figures. There are shown schematically:
- Fig. 1: an air vent of the invention according to a first exemplary embodiment in a perspective front view,
- Fig. 2: a detail view of the outflow grating of the air vent of Fig. 1,
- Fig. 3: another detail view of the outflow grating of the air vent of Fig. 1,
- Fig. 4: an air vent of the invention according to another exemplary embodiment in a partly sectioned perspective rear view,
- Fig. 5: an exploded view of the grating package of the air vent of Fig. 4,
- Fig. 6 a) - c): three horizontal sections through the air vent of Fig. 4,
- Fig. 7 a) - c): a rear view of the grating package of the air vent of Fig. 4 with exposed synchronizing lever,
- Fig. 8 a) - c): three vertical sections through the air vent of Fig. 4,
- Fig. 9: an air vent of the invention according to another exemplary embodiment in a front view together with a first operating element,
- Fig. 10 a) - c): an operating mechanism comprising the operating element of Fig. 9,
- Fig. 11 a) - c): an air vent of the invention according to another exemplary embodiment together with a second operating element,
- Fig. 12: an air vent of the invention according to another exemplary embodiment with slats as air-guiding elements in a perspective sectional view,
- Fig. 13: the air vent of Fig. 12 in a sectioned side view with horizontally arranged slats,
- Fig. 14: the air vent of Fig. 12 in a sectioned side view with downward slanting slats, and
- Fig. 15: the air vent of Fig. 12 in a sectioned side view with upward slanting slats.

Unless otherwise indicated, the same reference numbers in the figures denote the same objects.

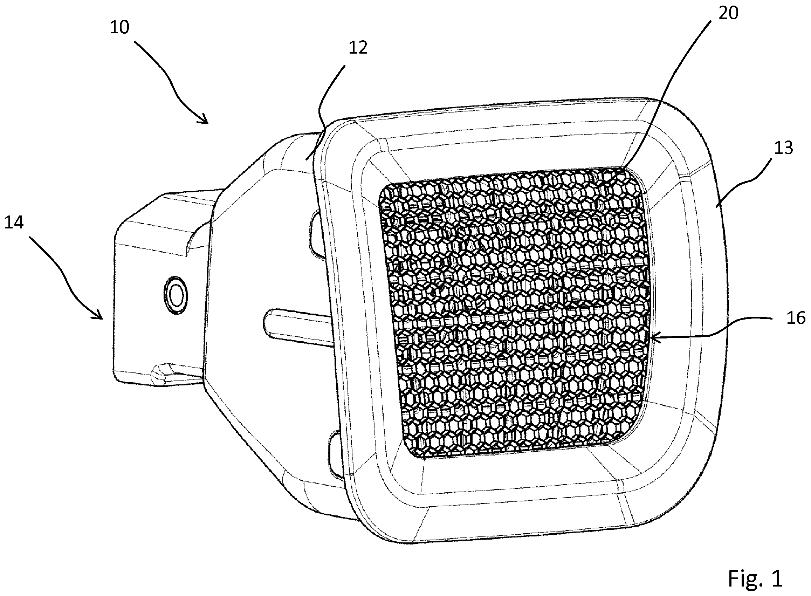

Figures 1 to 3 show an air vent of the invention according to a first exemplary embodiment. The air vent 10 comprises a housing 12 with an air duct 18, which extends from an air inlet end 14 to an air outlet end 16. At the air outlet end 16 there is arranged a diaphragm 13, in which an outflow grating 20 is received.

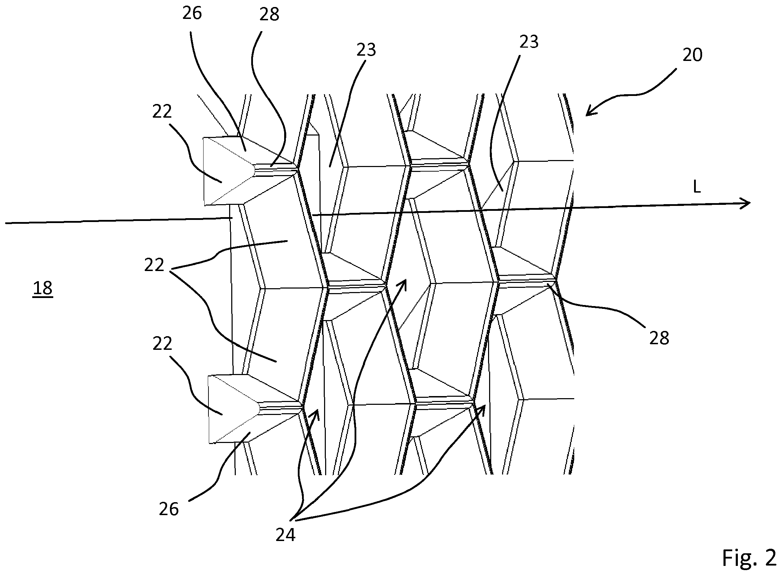

Figure 2 shows a detail view of the outflow grating 20 of Figure 1. It can be seen here that the outflow grating 20 comprises a plurality of honeycomb-shaped grating openings 24, each of them bounded by six webs 22 arranged in a regular hexagon. Each of the webs 22 separates two adjacent grating openings 24 from each other. The webs 22 have two bevels 26 each, which extend at an angle to a main flow direction L. In the exemplary embodiment shown here, the webs 22 therefore have an approximately triangular cross section area. Because of the inclination of the bevels 26, the grating openings 24 widen in the main flow direction L. The end edges of the webs 22 have fillets 28. Furthermore, stiffening webs 23 can be seen in Figure 2, which give a greater rigidity to the outflow grating 20.

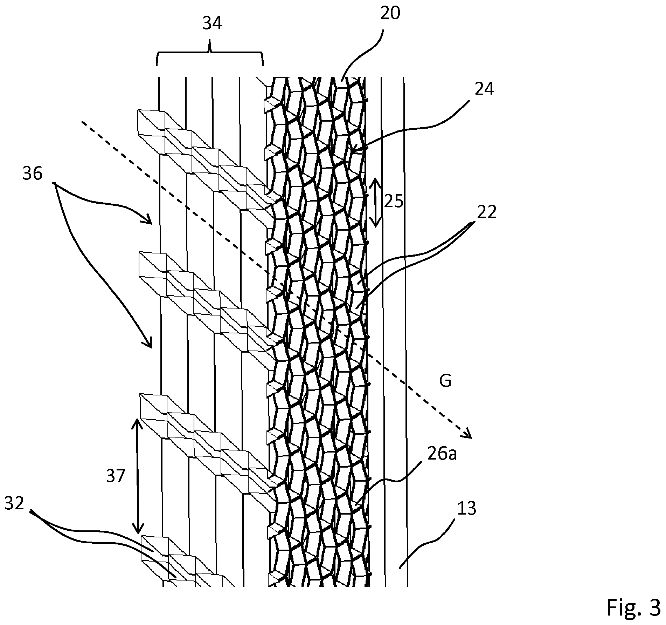

Because of the widening grating openings 24 of the outflow grating 20, the outflow grating 20 affects the orienting of an air flow flowing through the outflow grating only slightly. Therefore, an air flow deviating from the main flow direction L is not forced back in the direction of the main flow direction, but instead can maintain its direction of flow and slide along in each case one of the six bevels 26 of the grating opening 24. This is especially recognizable in Figure 3. Upstream from the outflow grating 20 are arranged air-guiding elements, in the present case five air-guiding gratings 32 as a common grating package 34. The air-guiding gratings 32 are displaced relative to each other such that an air flow directed along the arrow line designated G emerges from the air vent. This air flow G - directed downward in the example of Figure 3 - slides here in particular along the lower bevels 26a of the grating openings 24. Thanks to the honeycomb-shaped structure of the grating openings 24 or the webs 22, a correspondingly oriented air flow in five further directions is also especially well maintained by means of the other five bevels. The fillets 28 at the end edges of the webs 22 also contribute to a better air guidance. The air flow G can follow the course of the fillets 28 at least for a bit, which prevents a hard flow detachment and thus swirling.

It is furthermore noticeable in Figure 3 that the grating openings 36 of the air-guiding gratings 32 are larger than the grating openings 24 of the outflow grating 20. In particular, an opening width 37 of the grating openings 36 of the air-guiding grating 32 is larger than an opening width 25 of the grating openings 24 of the outflow grating 20. Hence, the outflow grating 20 has a substantially finer opening grid, which conceals the air-guiding gratings 32 located behind it as seen from the interior of the vehicle and thereby affords a visual cover. Despite the visual cover ensured by the outflow grating, a targeted deflection of the air flow can be achieved and maintained thanks to the upstream mounted air-guiding elements, especially also thanks to the discussed configuration of the outflow grating.

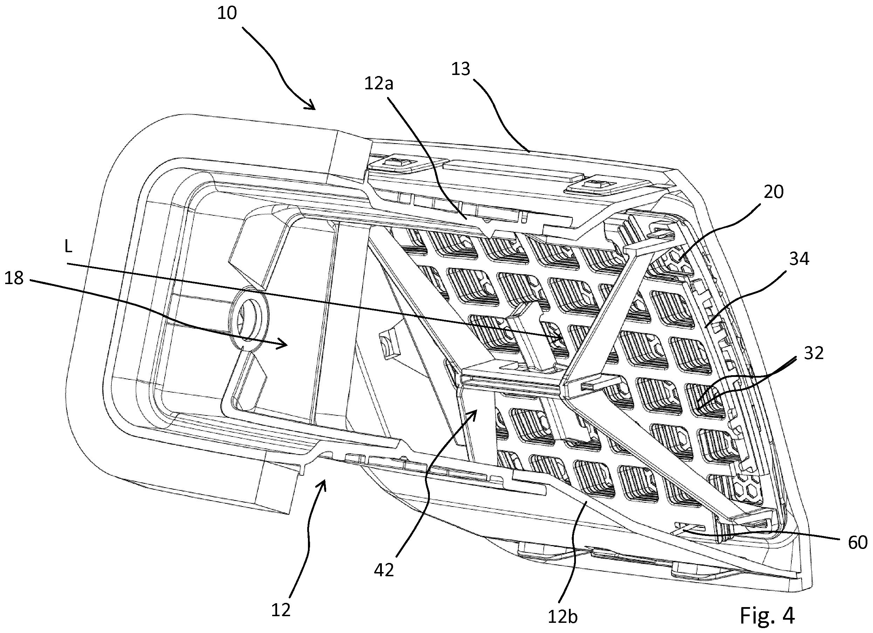

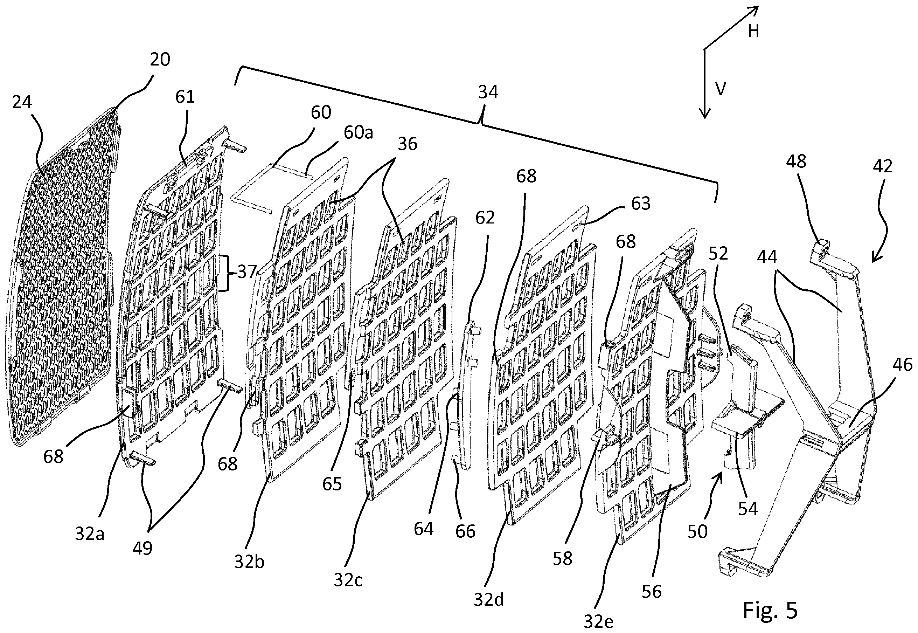

Figure 4 shows an air vent according to another embodiment in a partly sectioned perspective rear view. The air vent 10 of Figure 4 differs from the previously explained air vent only in that the housing 12 is two-piece. The housing 12 comprises a rear housing piece 12a and a front housing piece 12b, having the diaphragm. The air vent comprises an outflow grating 20 and a grating package 34 of air-guiding gratings 32, as in Fig. 3. The air-guiding gratings 32 of the grating package 34 are slightly curved and rest with substantially no gaps against each other and against the outflow grating 20. The outflow grating 20 as well as the grating package 34 and hence the air-guiding gratings 32 stand substantially - but not entirely - perpendicular to the main flow direction L. A deflection of an air flow flowing through the air duct 18 occurs by a displacement of the air-guiding gratings 32 relative to each other. This displacement is accomplished in the present case by a first operating mechanism, comprising in particular the outflow grating 20, a connection element 42, a tilting bracket 60 as well as a synchronizing lever 62. This is illustrated in particular in Figure 5.

Figure 5 shows the grating package 34 together with outflow grating 20 and the elements of the operating mechanism from Figure 4 in an exploded view. As can be seen, the grating package 34 consists of five air-guiding gratings 32a - 32e. The air-guiding gratings 32a - 32e respectively form an opening grid with grating openings 36. As is clearly seen in Figure 5, the grating openings 36 are larger, in particular they have a larger opening width 37 than the grating openings 24 of the outflow grating 20. In the manner already explained, the outflow grating 20 thus conceals the grating package 34 as seen from the interior of a vehicle.

The connection element 42 has four cross braces 44 extending outwardly from a centrally situated slide guideway 46. The cross braces 44 each have fastening means 48 at their ends, which in the present instance are designed as receiving openings. The air-guiding grating 32a next to the outflow grating 20 has fastening means 49 corresponding to the fastening means 48, being designed in the present instance as pins. Furthermore, the air-guiding grating 32a has a tilting bracket mounting 61 at its upper end in Figure 5, to which a tilting bracket 60 is secured. In the assembled state of the air-guiding gratings 32a - 32e, the tilting bracket 60 passes with its projecting ends 60a through the passageway openings 63 of the air-guiding gratings 32b to 32e. Fastening means 49 of the front air-guiding grating 32a pass through the corresponding fastening means 48 in the installed state.

The connection element 42 holds a slide 50. The slide 50 has a longitudinal guide 52 arranged vertically along the axis V and a transverse runner 54 arranged horizontally along the axis H. The slide 50 is received by its transverse runner 54 in the slide guideway 46 of the connection element 42 and thus allows a movement of the connection element 42 relative to the slide 50 along the horizontal axis H. In turn, a longitudinal runner 56 of the air-guiding grating 32e furthest away from the outflow grating 20 is guided in the longitudinal guide 52. The inner air-guiding grating 32e is secured by two bearing elements 58 arranged at opposite sides to the housing 12 of the air vent, only showing one of the bearing elements in Figure 5. The air-guiding grating 32e is thus stationary, i.e., it does not move upon adjustment of the other air-guiding gratings. The other air-guiding gratings 32a - 32d are adjusted synchronously relative to the air-guiding grating 32e. A synchronous adjustment of the air-guiding gratings 32a - 32d along the vertical axis V is ensured by the tilting bracket 60. A synchronous adjustment of the air-guiding gratings 32a - 32e along the horizontal axis H is made possible by a synchronizing lever 62. The outflow grating 22 is mounted on the outer air-guiding grating 32a, especially clipped thereon, and is thus rigidly connected to the outer air-guiding grating 32a.

The synchronizing lever 62 comprises a swivel bearing 64 by which it is mounted on the middle air-guiding grating 32c. The swivel bearing 64 here reaches through a bearing opening 65 of the middle air-guiding grating 32c. Furthermore, the synchronizing lever 62 has four pegs 66, which extend in pairs in opposite directions away from the synchronizing lever 62 and contact slotted links 68 of the air-guiding gratings 32a and 32b or 32d and 32e. The pegs 66 of the synchronizing lever 62 as well as the slotted links 68 of the air-guiding gratings 32a and 32b or 32d and 32e form here a slotted link guide making possible a lateral displaceability of the air-guiding gratings along the horizontal axis H, as explained in the following.

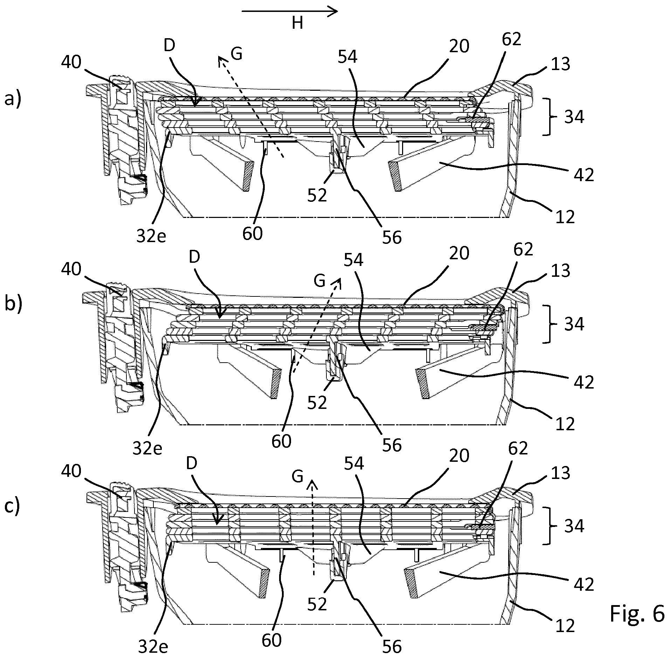

In order to adjust the air flow emerging from the air vent along the vertical axis V or horizontal axis H, i.e., upward or downward or to the sides, an operating person must move the outflow grating 20 in the corresponding direction. The outflow grating 20 in this embodiment serves therefore as an operating element, which can be displaced in a surface parallel to the areas of extent of the air-guiding gratings 32a - 32e. Since the outflow grating 20 is rigidly connected to the outer air-guiding grating 32a, a movement of the outflow grating 20 is also followed by a movement of the air-guiding grating 32a and thus of the connection element 42 connected to the air-guiding grating 32a at the rear. Thanks to the coupling of the air-guiding gratings 32 via the tilting bracket 60 and the synchronizing lever 62, the other air-guiding gratings are also moved synchronously with the air-guiding grating 32a. The movement is braced here against the stationary inner air-guiding grating 32a, which results in a relative displacement of the air-guiding gratings with respect to each other. For example, if the outflow grating 20 is moved along the horizontal axis H, the connection element 42 thus slides via its slide guideway 46 along the transverse runner 54 of the slide 50. The slide 50 can indeed move along the vertical V, in which case it slides by means of the longitudinal guide 52 along the longitudinal runner 56 of the inner air-guiding grating 32e. However, the slide 50 cannot move here along the horizontal axis H on account of the engagement of its longitudinal guide 52 with the longitudinal runner 56 extending along the vertical V. The horizontal movement is represented in Figure 6.

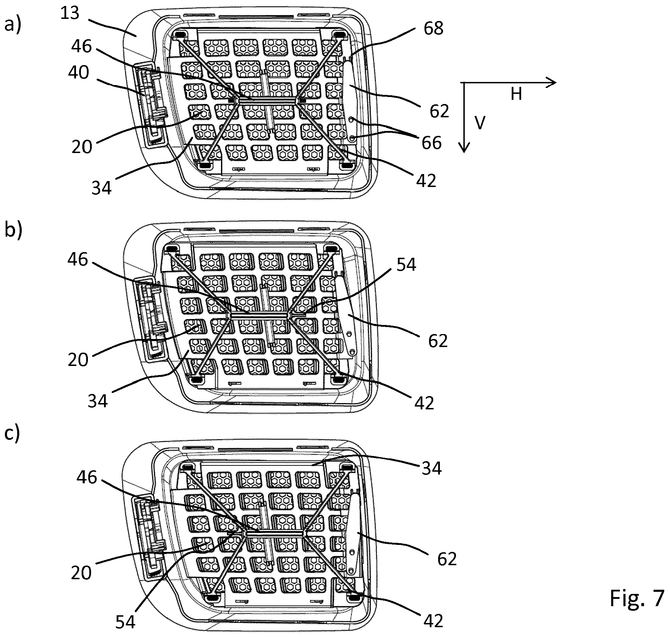

Figure 6 shows the air vent of Figure 4 in three sectional views along the horizontal axis H, where the sectional views show the grating package 34 in different positions. Figure 6c shows the grating package 34 in a zero position, in which the grating openings 36 form a flow opening D extending along the main flow direction. In Figure 6a, the outflow grating 20 starting from the zero position is adjusted to the left along the horizontal axis. Together with the outflow grating 20, the connection element 42 has also been adjusted to the left along the horizontal axis, while the slide guideway 46 of the connection element 42 runs along the transverse runner 54 of the slide 50. The other air-guiding gratings are here adjusted relative to each other synchronously such that a through opening D pointing to the left is formed. The result is a deflection of the air flow G to the right, as seen from the interior of a vehicle. Correspondingly, the outflow grating can be moved in the opposite direction along the horizontal axis, resulting in a deflection of the air to the right as shown in Figure 6b - or to the left as seen from the interior of a vehicle. The sliding of the connection element 42 by means of its slide guideway 46 along the transverse runner 54 can also be seen in particular in Figure 7.

Figure 7 shows the air vent from Fig. 4 looking along the main flow direction at the grating package 34 in three different positions of the grating package. In order to have a free view of the synchronizing lever 62, the other inner situated air-guiding gratings 32d and 32e are not shown in Figure 7. Figure 7a shows the zero position of the grating package 34, in which no deflection of the air flow from the main flow direction L occurs. In this case, the synchronizing lever 62 is oriented substantially vertically along the axis V. Upon movement of the outflow grating 20 and thus the connection element 42 along the horizontal axis H, the synchronizing lever 62 pivots about its swivel bearing 64 and thus is tilted with respect to the vertical V, in parallel with the planes of extension of the air-guiding gratings, as shown in Figures 7b and 7c. This tilting occurs because the synchronizing lever 62 is mounted by one of its pegs 66 in the stationary air-guiding grating 32e. The pegs 66 of the synchronizing lever 62 slide here in the slotted links 68 of the other air-guiding gratings 32a, b, d, e. Hence, the synchronizing lever 62 is tilted by a movement of the outflow grating 20 and consequently of the first air-guiding grating 32a, which in turn results in a synchronous movement of the other air-guiding gratings. The synchronizing lever thus synchronizes the movement of the air-guiding gratings along the horizontal axis H.

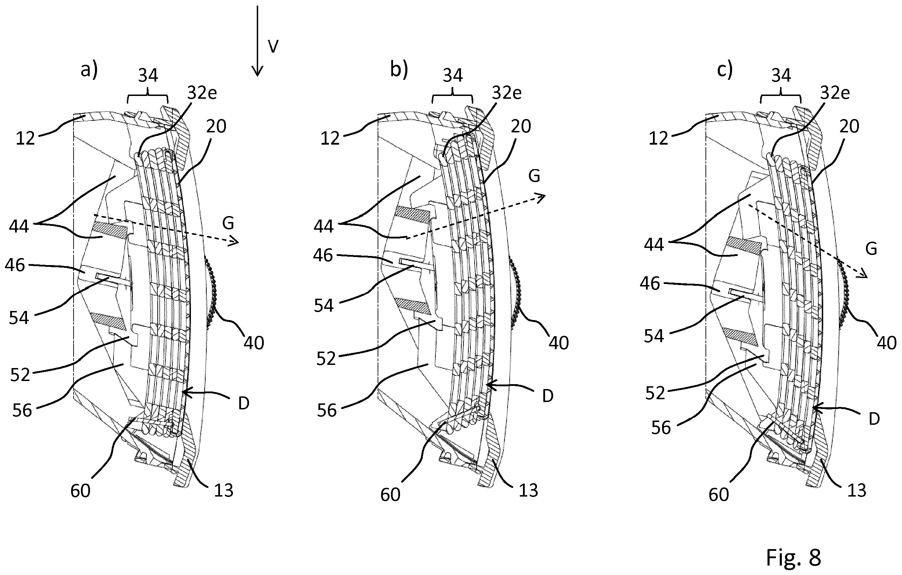

A deflection of the air flow from the main flow direction along the vertical direction occurs by a displacement of the outflow grating in the corresponding direction, i.e., upward or downward as seen from the interior of a vehicle. This is represented in Figure 8. In the zero position shown in Figure 8a, the grating openings 36 of the air-guiding gratings 32 coincide, so that they form through openings D extending substantially along the main flow direction. The air flow G consequently flows substantially along the main flow direction. Now, if the outflow grating 20 is adjusted upward along the vertical V, as shown in Figure 8b, the outer air-guiding grating 32a and there with the connection element 42 likewise thus moves upward. The connection element 42 carries along the slide 50 here via its slide guideway 46. The longitudinal guide 52 slides here along the longitudinal runner 56 of the inner air-guiding grating 32e arranged firmly on the housing. Thanks to the coupling of the air-guiding gratings 32 via the tilting bracket 60 along the vertical axis V, there occurs a synchronous movement of the air-guiding gratings 32b - d relative to each other. The through openings D thus deflect the air flow G upward from the main flow direction. Correspondingly, a downward movement of the outflow grating 20 along the vertical V (Figure 8c) results in a movement of the connection element 42 and consequently the nonstationary air-guiding gratings in the same direction. The slide 50 is led in this process by its longitudinal guide 52 on the longitudinal runner 56 of the inner air-guiding grating 32e mounted firmly on the housing. There thus occurs a downward deflection of the air flow G. Furthermore, one can see in Figure 8 a control wheel 40, which serves for the adjusting of a shut-off element mounted in the air duct upstream of the air-guiding elements, in order to throttle or entirely halt the air flow moving through the air duct.

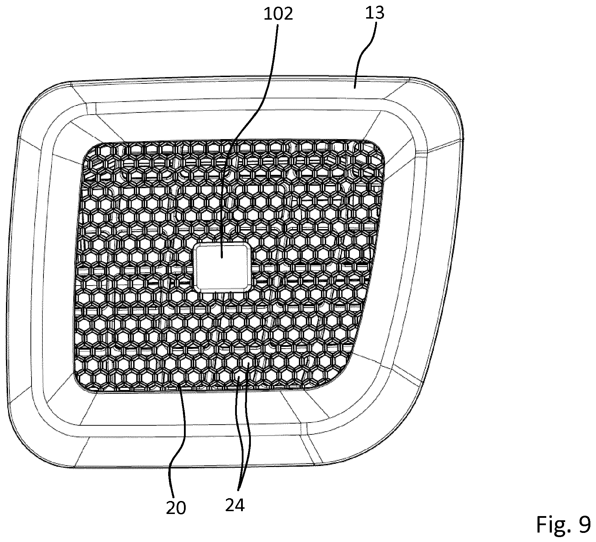

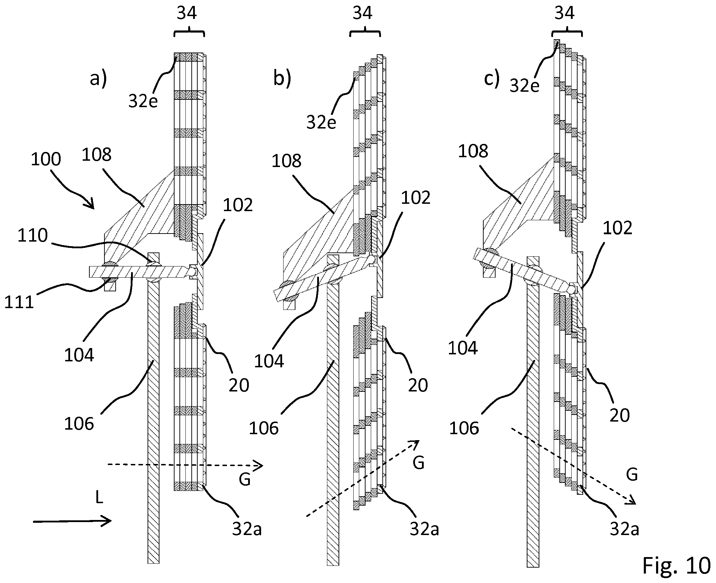

Figures 9 and 10 show another exemplary embodiment of an air vent according to the invention. This exemplary embodiment differs from the previous one in that the outflow grating 20 is stationary and has a central opening for the feedthrough of an operating element 102. Furthermore, the outflow grating 20 as well as the air-guiding gratings 32 of the grating package 34 are not curved, but rather are formed along parallel planes perpendicular to the main flow direction L. An operation of the air-guiding gratings situated behind the outflow grating 20 occurs by the operating element 102, which can be displaced along the arrows shown in a surface. For this purpose, the operating element 102 may be arranged on or at the outflow grating 20. For example, the operating element 102 may be recessed in the outflow grating 20, as shown in Figure 10. The operating element 102 in this case is designed as a plate, whose area is smaller than the outflow grating 20 and extends parallel thereto, as well as to the air-guiding gratings 32.

Figure 10 shows an operating mechanism 100 which comprises, besides the operating element 102, a transmission element 104 coupled to the operating element 102. The transmission element 104 extends through a central opening of the grating package 34 through all the air-guiding gratings 32 into the air duct 18. Via a first bearing 110 the transmission element 104 is connected to a stationary component 106 fixed to the housing and via a second bearing 111 is connected to a transmission arm 108 in a swiveling manner along the horizontal axis H and along the vertical axis V. The bearings 110, 111 may be ball joints in particular, wherein the front ball joint 110 and the rear ball joint 111 also enable a movement of the transmission element 104 along its longitudinal axis. The transmission arm 108 is connected to the furthest inward situated air-guiding grating 32e, which in this exemplary embodiment is not mounted stationary on the housing. Instead, in the present instance, as mentioned, the outflow grating 20 is stationary. Upon upward movement of the operating element 102 (Figure 10b), downward movement (Figure 10c), or movement to the sides (not shown), the inner air-guiding grating 32e is moved accordingly via the transmission element 104 and the transmission arm 108. The transmission element 104 moves substantially within a spherical segment in this case. Furthermore, the transmission element 104 moves relative to the bearings 110, 111 along its longitudinal axis, i.e., it moves out from or into the bearings 110, 111 for a bit. This results in a bracing by the stationary component 106 and the stationary outflow grating 20. In this exemplary embodiment, therefore, the outflow grating itself does not serve as the operating element for adjusting the air-guiding gratings. Instead, a separate operating element is provided. A synchronizing of the air-guiding gratings can occur in the manner described above.

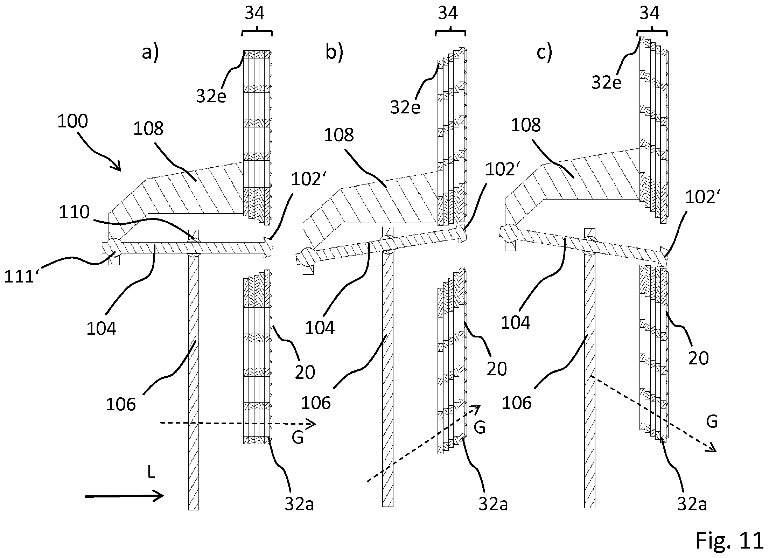

The exemplary embodiment in Figure 11 differs from that of Figures 9 and 10 by a different configuration of the operating element 102' as well as by a different bearing 111'. The operating element 102' is not configured as a plate, but instead as an end-side thickening of the transmission element 104. The operating element 102' here forms a prolongation of the transmission element 104 and is movable together with the transmission element 104 along a spherical surface, similar to a joystick. The transmission element 104 also moves here within a spherical segment, but - unlike in the previous exemplary embodiment - the rear ball joint 111' not being allowed any movement of the transmission element 104 along its longitudinal axis. Only the front ball joint 110 allows such an axial displacement of the transmission element. The transmission element 104 consequently moves within a spherical segment of a sphere whose center point lies at the ball joint 111'.

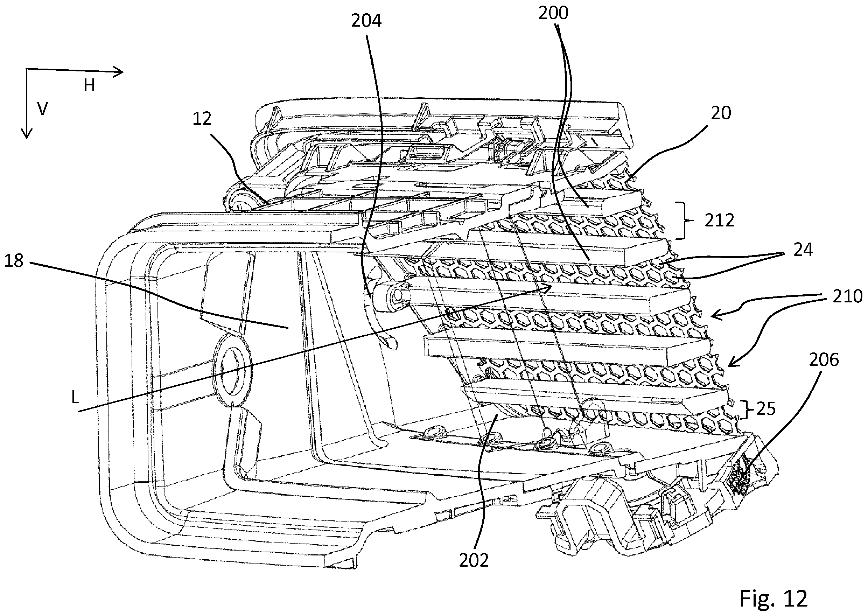

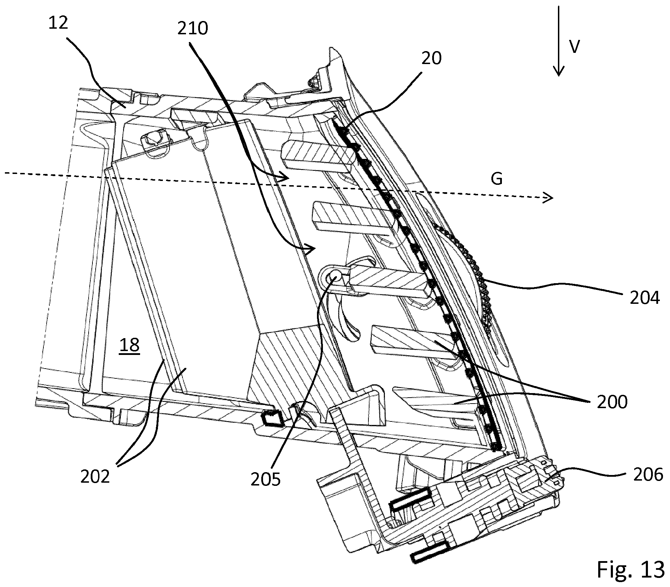

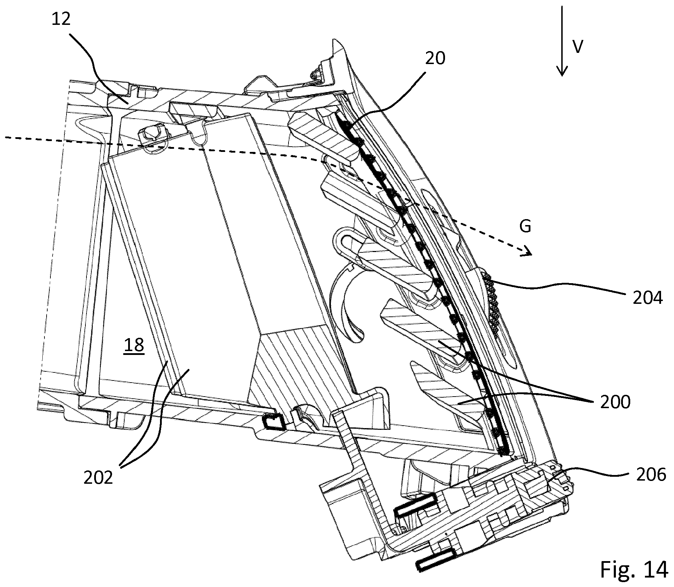

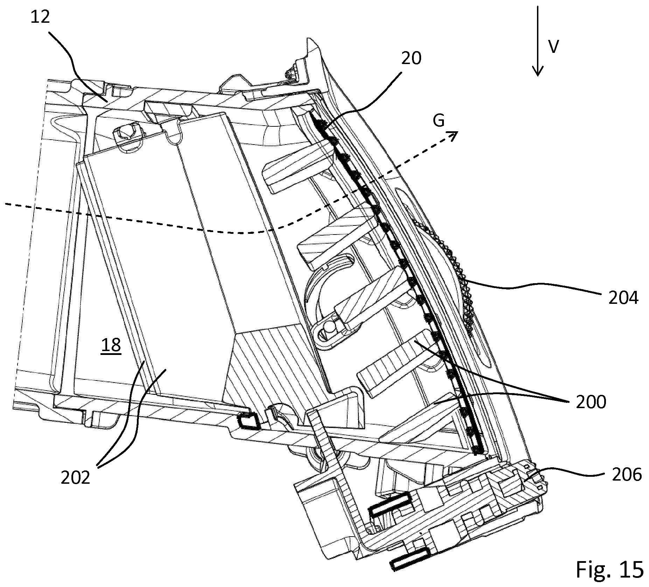

Figures 12 to 15 show an air vent according to another exemplary embodiment. Unlike the first exemplary embodiment, this air vent has no grating package made up of a plurality of air-guiding gratings, but instead has slats 200, 202 as the air-guiding elements. The outflow grating 20 in this embodiment is stationary, the slats being adjusted by separate operating elements, as explained below. Several horizontally disposed slats 200 for the deflection of the air flow from the main flow direction L in the vertical direction V can be seen here. An adjustment of the horizontal slats 200 occurs by a control wheel 204, which is connected by a tongue - and - groove connection 205 to one of the horizontal slats 200. The horizontal slats 200, in turn, are connected to each other, so that a movement of the control wheel 204 results in a synchronous movement of the slats 200. The vertical slats 202 extending along the vertical axis V are coupled together and can be tilted by a control wheel 206 with respect to the main flow direction. For reasons of clarity, Figure 12 shows only one of the vertical slats 202 schematically. A deflection of the air flow G from the main flow direction L upward or downward along the vertical axis V occurs, as can be seen from Figure 14 and 15, by corresponding tilting of the slats 200. A deflection along the horizontal axis to the sides can be done by adjusting the vertical slats 202.

In this embodiment, the opening grid of the air-guiding elements is formed on the one hand by the mutual spacings of the horizontal slats 200. Consequently, the grating openings 210 are defined here by the spacings between the horizontal slats 200. Also in this embodiment the air-guiding elements 200 form an opening grid with grating openings 210 which are larger than the grating openings 24 of the outflow grating 20. In particular, an opening width 212 of the grating openings of the slats 200 is larger than an opening width 25 of the grating openings 36 of the outflow grating 20. Correspondingly, the vertical slats 202 also form an opening grid with grating openings by the spacings existing therebetween.

### List of reference numbers

- 10: Air vent
- 12: Housing
- 13: Diaphragm
- 14: Air inlet end
- 16: Air outlet end
- 18: Air duct
- 20: Outflow grating
- 22: Webs
- 23: Reinforcements
- 24: Grating openings of the outflow grating
- 25: Opening width of the grating openings of the outflow grating
- 26: Bevels
- 26a: Lower bevels
- 28: Fillets
- 32: Air-guiding gratings
- 32a-e: Air-guiding gratings
- 34: Grating package
- 36: Grating openings of the air-guiding gratings
- 37: Opening width of the grating openings of the air-guiding gratings
- 40: Control wheel
- 42: Connection element
- 44: Cross braces
- 46: Slide guideway
- 48: Fastening means
- 49: Fastening means
- 50: Slide
- 52: Longitudinal guide
- 54: Transverse runner
- 56: Longitudinal runner
- 58: Bearing elements
- 60: Tilting bracket
- 60a: Projecting ends of the tilting bracket
- 61: Tilting bracket mounting
- 62: Synchronizing lever
- 63: Passageway openings
- 64: Swivel bearing
- 65: Bearing opening
- 66: Peg
- 68: Slotted link
- 100: Operating mechanism
- 102: Operating element
- 102`: Operating element
- 104: Transmission element
- 106: Stationary component
- 108: Transmission arm
- 110: Front ball joint
- 111: Rear ball joint
- 111': Rear ball joint
- 200: Horizontal slats
- 202: Vertical slats
- 204: Control wheel
- 205: Tongue - and - groove connection
- 206: Control wheel
- 210: Grating openings of the slats
- 212: Opening width of the grating openings of the slats
- D: Flow opening
- L: Main flow direction
- G: Deflected air flow
- V: Vertical axis
- H: Horizontal axis

## Claims

1. An air vent (10) for a vehicle, comprising:
- a housing (12),
- an air duct (18) delimited by the housing (12) and having an air inlet end (14) and an air outlet end (16), wherein an air flow (G) flowing through the air duct (18) can flow from the air inlet end (14) to the air outlet end (16) along a main flow direction (L),
- an outflow grating (20) arranged at the air outlet end (16), wherein the outflow grating (20) has an opening grid with grating openings (24) spaced apart from one another by means of webs (22), and
- a plurality of air-guiding elements (32, 200, 202) which are arranged in the air duct (18) upstream of the outflow grating (20) in the flow direction (L), wherein the air-guiding elements (32, 200, 202) form an opening grid with grating openings (36, 210) which are larger than the grating openings (24) of the outflow grating (20),
**characterized in that**
the grating openings (24) of the outflow grating (20) widen in the main flow direction (L), and
wherein the grating openings (24) of the outflow grating (20) each have an opening area in the range from 1 mm² to 25 mm².

2. The air vent (10) as claimed in claim 1,
wherein the grating openings (24) of the outflow grating (20) are honeycomb-shaped.

3. The air vent (10) as claimed in claim 1 or 2,
wherein the outflow grating (20) has reinforcements (23) on its inner side facing the air-guiding elements (32, 200, 202).

4. The air vent (10) as claimed in one of the preceding claims, wherein the webs (22) of the outflow grating (20) each have a rounded-off shape at their ends facing away from the air-guiding elements (32, 200, 202).

5. The air vent (10) as claimed in one of the preceding claims, wherein the air-guiding elements provided are pivotably mounted slats (200, 202) which extend perpendicularly to the main flow direction (L).

6. The air vent (10) as claimed in one of claims 1 to 4, wherein the air-guiding elements provided are air-guiding gratings (32) which extend substantially perpendicularly to the main flow direction (L) and form a grating package (34).

7. The air vent (10) as claimed in claim 6,
wherein a synchronizing mechanism is provided, by means of which a parallel displacement of the air-guiding gratings (32) is synchronized.

8. The air vent (10) as claimed in claim 7,
wherein the synchronizing mechanism has at least one synchronizing lever (62) which is coupled to the air-guiding gratings (32).

9. The air vent (10) as claimed in claim 8,
wherein the air-guiding gratings (32) are coupled to the synchronizing lever (62) by means of a slotted link guide (66, 68).

10. The air vent (10) as claimed in one of claims 7 to 9,
wherein an inner air-guiding grating (32e) is fixed and the remaining air-guiding gratings are adjusted synchronously, or in that an outer air-guiding grating (32a) is fixed and the remaining air-guiding gratings are adjusted synchronously.

11. The air vent (10) as claimed in one of claims 7 to 10,
wherein the air vent (10) has an operating element (20, 102) for adjusting the air-guiding gratings (32), wherein the operating element (20, 102) is displaceable in an area which extends parallel to an area of extent of at least one of the air-guiding gratings (32).

12. The air vent (10) as claimed in claim 11,
wherein the outflow grating (20) forms the operating element.

13. The air vent (10) as claimed in one of claims 7 to 10,
wherein an operating element (102) is arranged on the outflow grating (20), wherein a transmission element (104) coupled to the operating element (102) extends through the outflow grating (20) and the grating package (34), is supported on a stationary component (106) within the air duct (18) and acts on an inner air-guiding grating (32e).

## Patentansprüche

1. Luftausströmer (10) für ein Fahrzeug, der Folgendes aufweist:
- ein Gehäuse (12),
- einen durch das Gehäuse (12) begrenzten Luftkanal (18), welcher ein Lufteinlassende (14) und ein Luftauslassende (16) hat, wobei ein durch den Luftkanal (18) strömender Luftstrom (G) von dem Lufteinlassende (14) zu dem Luftauslassende (16) entlang einer Hauptströmungsrichtung (L) strömen kann,
- ein an dem Luftauslassende (16) angeordnetes Ausströmgitter (20), wobei das Ausströmgitter (20) ein Öffnungsgitter mit Gitteröffnungen (24) aufweist, die mittels Stegen (22) voneinander beabstandet sind, und
- eine Vielzahl von Luftleitelementen (32, 200, 202), die in dem Luftkanal (18) in Strömungsrichtung (L) stromaufwärts des Ausströmgitters (20) ausgebildet sind, wobei die Luftleitelemente (32, 200, 202) ein Öffnungsgitter mit Gitteröffnungen (36, 210) ausbilden, die größer sind als die Gitteröffnungen (24) des Ausströmgitters (20),
**dadurch gekennzeichnet,**
**dass** die Gitteröffnungen (24) des Ausströmgitters (20) sich in der Hauptströmungsrichtung (L) erweitern, und
wobei die Gitteröffnungen (24) des
Ausströmgitters (20)jeweils eine Öffnungsfläche im Bereich von 1 mm² bis 25 mm² aufweisen.

2. Luftausströmer (10) nach Anspruch 1,
wobei die Gitteröffnungen (24) des Ausströmgitters (20) wabenförmig sind.

3. Luftausströmer (10) nach Anspruch 1 oder 2,
wobei das Ausströmgitter (20) auf seiner den Luftleitelementen (32, 200, 202) zugewandten Innenseite Verstärkungen (23) aufweist.

4. Luftausströmer (10) nach einem der vorhergehenden Ansprüche, wobei die Stege (22) des Ausströmgitters (20) an ihren von den Luftleitelementen (32, 200, 202) abgewandten Enden jeweils eine abgerundete Form aufweisen.

5. Luftausströmer (10) nach einem der vorhergehenden Ansprüche, wobei die vorgesehenen Luftleitelemente schwenkbar gelagerte Lamellen (200, 202) sind, die sich senkrecht zu der Hauptströmungsrichtung (L) erstrecken.

6. Luftausströmer (10) nach einem der Ansprüche 1 bis 4,
wobei die vorgesehenen Luftleitelemente Luftleitgitter (32) sind, die sich im Wesentlichen senkrecht zu der Hauptströmungsrichtung (L) erstrecken und ein Gitterpaket (34) ausbilden.

7. Luftausströmer (10) nach Anspruch 6,
wobei ein Synchronisationsmechanismus vorgesehen ist, mittels dessen eine parallele Verschiebung der Luftleitgitter (32) synchronisiert wird.

8. Luftausströmer (10) nach Anspruch 7,
wobei der Synchronisationsmechanismus zumindest einen Synchronisationshebel (62) aufweist, der mit den Luftleitgittern (32) gekoppelt ist.

9. Luftausströmer (10) nach Anspruch 8,
wobei die Luftleitgitter (32) mittels einer geschlitzten Verbindungsführung (66, 68) mit dem Synchronisationshebel (62) gekoppelt sind.

10. Luftausströmer (10) nach einem der Ansprüche 7 bis 9,
wobei ein inneres Luftleitgitter (32e) fest ist und die verbleibenden Luftleitgitter synchron verstellt werden, oder dass ein äußeres Luftleitgitter (32a) fest ist und die verbleibenden Luftleitgitter synchron verstellt werden.

11. Luftausströmer (10) nach einem der Ansprüche 7 bis 10, wobei der Luftausströmer (10) ein Bedienelement (20, 102) zum Verstellen der Luftleitgitter (32) aufweist, wobei das Bedienelement (20, 102) in einem Bereich verschiebbar ist, der sich parallel zu einer Erstreckungsfläche zumindest eines der Luftleitgitter (32) erstreckt.

12. Luftausströmer (10) nach Anspruch 11,
wobei das Ausströmgitter (20) das Bedienelement ausbildet.

13. Luftausströmer (10) nach einem der Ansprüche 7 bis 10, wobei an dem Ausströmgitter (20) ein Bedienelement (102) angeordnet ist, wobei sich ein mit dem Bedienelement (102) wirkverbundenes Übertragungselement (104) durch das Ausströmgitter (20) und das Gitterpaket (34) erstreckt, an einer ortsfesten Komponente (106) innerhalb des Luftkanals (18) abgestützt ist und auf ein inneres Luftleitgitter (32e) wirkt.

## Revendications

1. Aérateur (10) pour un véhicule, comprenant :
- un logement (12),
- un conduit d'air (18) délimité par le logement (12) et ayant une extrémité d'entrée d'air (14) et une extrémité de sortie d'air (16), dans lequel un flux d'air (G) s'écoulant à travers le conduit d'air (18) peut s'écouler depuis l'extrémité d'entrée d'air (14) jusqu'à l'extrémité de sortie d'air (16) le long d'une direction de flux principale (L),
- une grille de sortie de flux (20) agencée au niveau de l'extrémité de sortie d'air (16), dans laquelle la grille de sortie de flux (20) a une grille d'ouverture avec des ouvertures de grille (24) espacées les unes des autres au moyen de nervures (22), et
- une pluralité d'éléments de guidage d'air (32, 200, 202) qui sont agencés dans le conduit d'air (18) en amont de la grille de sortie de flux (20) dans la direction de flux (L), dans lequel les éléments de guidage d'air (32, 200, 202) forment une grille d'ouverture avec des ouvertures de grille (36, 210) qui sont plus grandes que les ouvertures de grille (24) de la grille de sortie (20),
**caractérisé en ce que** les ouvertures de grille (24) de la grille de sortie (20) s'élargissent dans la direction de flux principale (L), et
dans lequel les ouvertures de grille (24) de la grille d'écoulement (20) ont chacune une zone d'ouverture dans la plage de 1 mm² à 25 mm².

2. Aérateur (10) selon la revendication 1,
dans lequel les ouvertures de grille (24) de la grille d'écoulement (20) sont en forme de nid d'abeilles.

3. Aérateur (10) selon la revendication 1 ou 2,
dans lequel la grille de sortie de flux (20) a des renforts (23) sur son côté intérieur faisant face aux éléments de guidage d'air (32, 200, 202).

4. Aérateur (10) selon l'une quelconque des revendications précédentes,
dans lequel les nervures (22) de la grille de sortie de flux (20) ont chacune une forme arrondie à leurs extrémités opposées aux éléments de guidage d'air (32, 200, 202).

5. Aérateur (10) selon l'une quelconque des revendications précédentes,
dans lequel les éléments de guidage d'air fournis sont des lames montées de manière pivotante (200, 202) qui s'étendent perpendiculairement à la direction de flux principale (L).

6. Aérateur (10) selon l'une quelconque des revendications 1 à 4,
dans lequel les éléments de guidage d'air fournis sont des grilles de guidage d'air (32) qui s'étendent sensiblement perpendiculairement à la direction de flux principale (L) et forment un ensemble de grilles (34).

7. Aérateur (10) selon la revendication 6,
dans lequel un mécanisme de synchronisation est fourni, au moyen duquel un déplacement parallèle des grilles de guidage d'air (32) est synchronisé.

8. Aérateur (10) selon la revendication 7,
dans lequel le mécanisme de synchronisation a au moins un levier de synchronisation (62) qui est couplé aux grilles de guidage d'air (32).

9. Aérateur (10) selon la revendication 8,
dans lequel les grilles de guidage d'air (32) sont couplées au levier de synchronisation (62) au moyen d'un guide de liaison à fente (66, 68).

10. Aérateur (10) selon l'une quelconque des revendications 7 à 9,
dans lequel une grille de guidage d'air interne (32e) est fixée et les grilles de guidage d'air restantes sont ajustées de manière synchrone, ou en ce qu'une grille de guidage d'air externe (32a) est fixée et les grilles de guidage d'air restantes sont ajustées de manière synchrone.

11. Aérateur (10) selon l'une quelconque des revendications 7 à 10,
dans lequel l'aérateur (10) a un élément d'actionnement (20, 102) pour l'ajustage des grilles de guidage d'air (32), dans lequel l'élément d'actionnement (20, 102) est déplaçable dans une zone qui s'étend parallèlement à une zone d'étendue d'au moins une parmi les grilles de guidage d'air (32).

12. Aérateur (10) selon la revendication 11,
dans lequel la grille de sortie de flux (20) forme l'élément d'actionnement.

13. Aérateur (10) selon l'une quelconque des revendications 7 à 10,
dans lequel un élément d'actionnement (102) est agencé sur la grille de sortie de flux (20), dans lequel un élément de transmission (104) couplé à l'élément d'actionnement (102) s'étend à travers la grille de sortie de flux (20) et l'ensemble de grilles (34), est supporté sur un élément fixe (106) à l'intérieur du conduit d'air (18) et agit sur une grille de guidage d'air interne (32e).
